# EUROPEAN PATENT APPLICATION

(11) **EP 1 213 577 A1**
(43) Date of publication of application: **12.06.2002**
(21) Application number: 01850204.7
(22) Date of filing: 30.11.2001
(51) Int. Cl.: G01N 15/02, G01N 21/88

(54) **Method and device for determining the existence of contaminations in a material**

(30) Priority: 07.12.2000 SE 0004523
(71) Applicant: Svante Björk AB, 434 37 Kungsbacka (SE)
(72) Inventor: Björk, Svante, 434 46 Kungsbacka (SE)
(74) Representative: Andersson, Per Rune

(57) **Abstract**

The invention relates to method for determining the existence of contaminations in a material, which method comprises: providing a relatively small partial quantity of said material as a sample quantity, and detecting the existence of any defects in said sample quantity. The method is characterized in that it comprises detecting defects of a first size and at least a second size, determining a relationship of the number of detected defects as a function of the size of the defects, and determining the sizes of a number of defects which is so large that the distribution of detected defects in said sample quantity provides information regarding the existence of defects of additional sizes in said material. The invention also relates to a device for determining the existence of contaminations in a material. By means of the invention, an accurate and efficient assessment of the quality of a material, e.g. a polymer material, is provided.

## Description

### TECHNICAL FIELD:

The present invention relates to a method for determining the existence of contaminations in a material, which method comprises providing a relatively small partial quantity of said material as a sample quantity and detecting the existence of any defects in said sample quantity.

The invention is particularly intended for use in connection with detection of contaminations in a material which is utilized as a raw material when manufacturing electrical high-voltage cables, and can be utilized for quality determination of such material.

The invention also relates to a device for such determination of the existence of contaminations.

### BACKGROUND OF THE INVENTION:

When manufacturing electrical cables for high and medium high voltages, preferably in the order of 50 kV and upwards, one or more electrical conductors are normally provided with a semi-conductive layer and a surrounding insulation coating. In this context, it is previously known to use a particular type of oil-impregnated paper insulation for the production of this insulation coating. However, in recent years, synthetic materials, preferably in the form of polythene, have become increasingly common for producing this coating. This choice of material entails certain advantages compared to the previous oil-impregnated paper insulation, for instance with regard to maintenance, service and service life. Furthermore, the polythene insulation is a more environment-friendly material than the oil-/paper insulation.

Regarding the insulation material for electrical cables, there is a desire to provide it with as high a temperature durability as possible. This would in turn guarantee that the insulation coating does not run the risk of melting during any short-circuiting currents in such a cable. In connection with medium and high voltage cables, it is furthermore of great importance that there are no contaminations in the insulating polythene coating, as this could lead to electrical breakdown in the cable. Such breakdown can in turn lead to the cable being destroyed. When manufacturing the insulating polythene coating, it is however previously known that certain inhomogeneities, i.e. contaminations, may occur in the material. Such defects could spread with time in the insulation material and cause electrical breakdown in a cable.

For the above reasons, there are very stringent demands in the manufacture of cables for medium and high voltages, on the purity of the raw material being used for the insulating polythene coating of the cable. This raw material normally consists of pellets, i.e. balls or grains, of polythene. In order to satisfy stringent purity demands, a fault check is commonly made on this raw material in connection with cable manufacturing. The purpose of this fault check is to enable a detection and sorting-out of those pellets containing any form of defect (i.e. in the form of air bubbles, contaminations, deviating symmetry, deviating colour, etc), as they might otherwise cause the above problems in the finished cable.

According to the known art, there are various methods for determining the existence of any defects and impurities in said polythene material. One previously known method is based on using a small amount of pellets, e.g. in the order of one kilo, as a raw material for manufacturing a thin polythene film. Said film may then pass through a fault check, which either can be carried out by means of a manual (i.e. visual) inspection or by means of an automatic detection device. In this manner, it can be established whether stipulated requirements regarding the existence of a maximum permissible quantity of contaminations are fulfilled for the sample quantity in question.

As regards automatic detection devices, a system is previously known from patent document WO 98/21568 which utilizes a detection device comprising a detector of the CCD camera type for detecting any defects in the film.

Irrespective of whether the current sample quantity is checked manually or automatically, there is a demand for utilizing the testing in order to obtain a measure of the quality of the current material. For example, according to the known art, it can be established that if one or more defects in the form of contaminations of a size which exceeds a certain limit value (e.g. a maximum length of 100 µm) is found in the sample quantity, the current material shall be considered as being of an unacceptable quality. On the other hand, if no contaminations of a size which exceeds said limit value is detected in the sample quantity, the quality of the material can be considered as acceptable.

This method for detecting defects makes it possible to determine the quality of the sample quantity. However, the method suffers from a disadvantage in that it only provides access to a smaller sample quantity, i.e. a very small part of the raw material which is utilized during the manufacturing process in question (e.g. manufacture of electrical cables). Even if an accurate inspection of the sample quantity is made in order to determine whether there are any defects which are bigger than said limit value, it can however not be established without doubt whether there are any additional contaminations in the part of the material which is not included in the actual sample quantity. This can result in a situation where a material is considered to be of an acceptable quality in spite of the fact that there may exist additional contaminations in the material which is not included in the sample quantity. Consequently, this results in a certain degree of insecurity in connection with the testing of the material, which is a disadvantage.

It is true that the above-mentioned problem can be solved by making checks of larger amounts of material. However, this is time-consuming and costly, and obviously also results in that material is used up for testing purposes instead of being utilized in the actual manufacturing process for which the material is intended.

In order to solve the above-mentioned problem, there is a previously known method in which the entire raw material, i.e. the pellets themselves, can be checked. This method is described in the patent document WO 99/37412. If all pellets within a manufacturing process are checked regarding purity, this creates a possibility to purify the raw material to 100 %, which would allow an extremely high degree of purity of the material. An additional advantage regarding this method is that defective (and sorted-out) pellets can be analyzed, which creates possibilities to find out the reason why they have been contaminated. However, this method requires that the entire material be tested, which may be considered to be too time-consuming and costly in connection with certain manufacturing processes. Furthermore, it can be noted that this method has a limited capacity, i.e. only a certain limited quantity of pellets per unit of time can be fed forward and analyzed.

### SUMMARY OF THE INVENTION:

The object of the present invention is to provide an improved method for determining of the existence of contaminations in a material, particularly a plastic material, by means of which the above-mentioned problem is solved. This object is achieved by means of a method, the features of which are described in the appended claim 1.

The method according to the invention comprises providing a relatively small partial quantity of said material as a sample quantity, and detecting the existence of any defects in said sample quantity. The method is characterized in that it comprises detecting defects of a first size and at least a second size, determining a relationship of the number of detected defects as a function of the size of the defects, and determining the sizes of a number of defects which is so large that the distribution of detected defects in said sample quantity provides information regarding the existence of defects of additional sizes in said material.

The determination of the relative existence of said defects depending on their size can particularly be utilized for determining a measure of the quality of the material.

The invention also relates to a device for determining the existence of contaminations in a material, wherein said determining is carried out for a relatively small partial quantity of said material which constitutes a sample quantity, which device comprises a detector for detecting the existence of any defects in said sample quantity. The device is characterized in that said detector is provided by a measuring unit which is adapted for detecting defects of a first size and at least a second size and for determining a relationship of the number of detected defects as a function of the size of the defects, comprising determining the sizes of a number of defects which is so large that the distribution of detected defects in said sample quantity provides information regarding the existence of defects of additional sizes in said material.

The invention is based on the fact that it comprises a detection of a relatively large number of defects and within a relatively large interval regarding the size of the defects. When information regarding the size of a statistically reliable number of defects has been obtained, e.g. 50 or more defects, and preferably 500 or more defects, the sizes of these defects can be reproduced in a graph which thus shows the number of defects per size class. By means of information regarding detected defects of at least two size classes, information regarding any existing defects of additional sizes also can be obtained. In this manner, it can be established how contaminations will be distributed and how they will occur in the entire amount of material. From this distribution, a measure of the quality of the entire material (and not merely the sample quantity) can be provided. Due to the fact that a sufficiently large number of defects from a statistical point of view is detected, it is possible, for example by means of extrapolation, to obtain information regarding the existence of defects of a certain size, in spite of the fact that these defects per se never have been detected in the sample quantity.

By means of the invention, certain advantages are achieved. Firstly, it can be noted that in contrast to the prior art, which is based on the fact that the size of detected defects is compared with a certain limit value, by means of which the quality of the entire material is assessed from this determination, the present invention makes it possible to assess the quality of the entire material (i.e. not merely the sample quantity). This provides a possibility for a quality rating which is not limited to the sizes of the sample quantity. Furthermore, the invention provides a more flexible measurement which not only relates to whether a certain size limit has been exceeded. In this manner, a quality rating can be performed on the basis of a number of various parameters, for example related to the size distribution of the defects in the entire material.

Advantageous embodiments of the invention are described in the appended, dependent claims.

### BRIEF DESCRIPTION OF THE DRAWINGS:

The invention will be explained in further detail below, with reference to a preferred embodiment example and the enclosed drawings, of which
- Fig. 1: shows a schematic side view of a detection device which can be utilized in connection with the present invention, and
- Fig. 2: is a graph which shows the size distribution of a number of detected defects in a sample quantity.

### PREFERRED EMBODIMENT:

The present invention is constituted by a method and a device for detection of the existence of defects in the form of contaminations, inhomogeneities, etc in a material. The invention is particularly suitable for testing of a small partial amount - a so-called sample quantity - which is taken from the material in question.

The invention is particularly, but not exclusively, suitable for detection of contaminations in a material which is intended for manufacturing an insulation coating for electrical high-voltage cables (more precisely cables for voltages from approximately 10 kV and upwards). In this case, this material, which normally is constituted by polythene, is used for manufacturing the insulation coating. However, the invention is not limited to the testing of this material, but may be used for other types of materials testing where there exist a desire for an accurate and efficient detection of the existence of contaminations.

Furthermore, the invention is based on the knowledge that the detection of any contaminations takes place in such manner that the existence of contaminations of various sizes is determined in the sample quantity and utilized in order to create a basis for a statistically reliable assessment of the distribution of defects in the entire material, including defects of sizes which have not existed in the sample quantity.

In contrast to the prior art, the invention utilizes information regarding defects of relatively small size, i.e. defects the size of which is considerably smaller than limit values for what normally is accepted in order for the material to be considered as acceptable. Together with the fact that a large number of defects is detected according to the invention, information is obtained regarding the quality of the entire material, thus not merely of the sample quantity. The principles of the invention will be described in detail below.

According to what is per se previously known from the patent document WO 98/21568, an automated optical arrangement can be utilized for detecting contaminations in a material. According to what will be described hereinafter, this per se previously known arrangement also can be utilized in connection with the present invention.

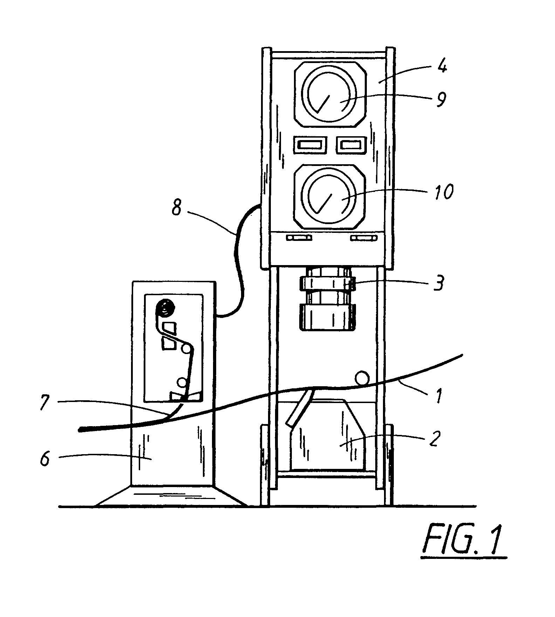

With reference to Fig. 1, it is shown such an arrangement for detection of defects in an essentially plane strip 1, preferably a strip of a polymer film, more precisely polythene or similar, which in this embodiment is transparent. The arrangement comprises a source of light 2, for example in the form of a scanning laser or some other suitable source of light, which is utilized in order to illuminate the transparent strip 1 along essentially its entire length. Furthermore, the device is provided with a focusing device 3, which for example comprises a lens system which is provided along an optical axis, in order to focus the light which passes the transparent strip 1, and a detector 4 which is provided with one or more detector devices (not shown). These detector devices can for example be constituted by a CCD camera or a photo diode which detects light from a mirror which in turn rotates essentially over the width of the film. In this manner, any existing defects on or in the strip 1 can be detected.

Thus, the detector 4 can provide a picture of an existing defect and the light which passes through the strip 1.

Furthermore, the arrangement according to Fig. 1 is arranged in such a manner that the strip 1 can be transferred in its longitudinal direction, past the detector 4, by means of a transport device (not shown in detail). This transport device can for example comprise one or more electric motors which are provided with rollers and which drive the strip 1 forward with a suitably selected speed.

The detector 4 is preferably arranged in connection with an electronic device (not shown) which in turn is provided with a mains power unit for power supply to the detector. The electronic device also comprises a first unit for control of the source of light and a second unit for control of the sensitivity of the detector. Said first unit can e.g. be utilized for adjusting the intensity of the source of light, indicate errors regarding the lamp, etc. Thus, in order for the focusing device 3 to be able to obtain the same amount of light independently of the thickness of the strip, said first unit could be arranged to adjust the intensity of the lamp automatically or manually so that an essentially constant amount of light enters through the focusing device 3. Said second unit can be utilized for transmission of signals to a marking device 6, for example comprising an electric printer, in order to mark where a detected defect is situated on the strip. This takes place by applying a marker in the form of a label or adhesive strip 7 on the strip, essentially at the position where the defect is situated. The detector and the marking device can be connected to each other, e.g. by means of an electrical cable 8 (alternatively wireless), by means of which the detector can transmit signals to the marking device 6 if a defect is detected.

Moreover, the sensitivity, i.e. the detectability, of said second unit can be adjusted in order to increase or decrease the detectability of a defect with a certain accuracy. Furthermore, the detector 4 can be provided with a focusing indicator 9 and an exposure indicator 10.

In order to detect any existing defects in or on the strip 1, it can be illuminated by means of the light source 2. In this case, the light which passes the strip 2 can be focused by means of the focusing device 3. The strip 1 is situated in a first plane between the light source 2 and the focusing device 3, whereas the optical axis of the focusing device 3 is situated in a second plane and focuses the incoming light to the detector 4 by means of the focusing device 3. In this manner, an existing defect in or on the strip 1 can be detected by means of the detector 4. Next, the marking device 6 can mark the defect by means of a marker, which is placed by the defect. This course of events is described in detail in the document WO 98/21568 and does not per se form part of the present invention. Preferably, the marker is situated on a label 7, which in turn is attached to the strip 1. Apart from the marker, the marking device 6 can print out the dimensions of the defect and/or the position on the strip of the defect. The label may for example be constituted by a tag which is provided with an attachment material, e.g. glue of some sort, on one if its sides.

Thus, according to what has been described above, a method of determining the existence of impurities is utilized according to the prior art, which method is based on the fact that defects of various sizes are detected. According to the invention, a statistically reliable basis is utilized in the form of a large amount of information regarding the sizes of the detected contaminations. Thus, this detection is so accurate that it provides a detection of contaminations of various sizes, of coloured or transparent material, or contaminations of a certain material.

Furthermore, according to the invention, information related to the detected defects in the sample strip 1 is stored. To this end, the detector 4 is preferably connected to an external (not shown) measuring unit comprising a computer which is adapted to receive data from the detector 4 regarding each one of the detected defects. More precisely, the invention is based on the fact that information regarding the size of the respective defect, i.e. a measurement regarding for example the greatest length or the cross section area of the respective defect, is detected and stored in the computer unit. To this end, the computer unit is in a known manner provided with a data memory for storage of the current pieces of information.

The invention is based on the fact that during a measuring process, i.e. during the inspection of the above-mentioned strip 1, defects within a large interval regarding their size are detected. The invention is also based on the fact that measuring data regarding a relatively large number of contaminations in the strip are generated and stored. In contrast to the prior art - where the number of defects whose size exceeds a certain limit value determines the quality of the sample quantity, and consequently also the quality of the entire material in question- a basic principle of the invention is that measuring data regarding defects of considerable smaller size than such a limit value is also taken into consideration. Furthermore, according to the invention, generation of data takes place regarding the size of a relatively large number of contaminations in the strip 1, e.g. 50 or more, but preferably 500 or more. The exact number can vary within the scope of the invention. However, it can be established that by means of information regarding a relatively large number of defects of varying sizes, a statistically reliable basis is provided for assessment of the quality of the entire material, i.e. not merely the quality of the sample quantity. In other words, it can be said that if the number of detected defects is large enough, the existence and the distribution of defects in the entire material will essentially correspond to the existence and the distribution of defects in the sample quantity.

Preferably, information regarding detected defects is utilized in such manner that information regarding the number of detected defects within certain fixed sizes is determined. In this case, the number of defects of the respective size is selected in such manner that it becomes statistically reliable. This in turn implies that the number is so large that the generated information can be utilized for determining the existence of defects of additional sizes, i.e. ranges of sizes within which no defects have been detected. In this way, since a statistically reliable basis is utilized, it is possible, by means of for example extrapolation, to obtain information regarding the existence of various defects of certain predetermined sizes, in spite of the fact that the defects per se have not been detected. Preferably, the invention can be utilized in order to detect defects which are smaller than a predetermined limit value (e.g. 100 µm, which can be selected on the basis of acknowledged standards) and, on the basis of information regarding these defects, provide information about defects which are bigger than said limit value.

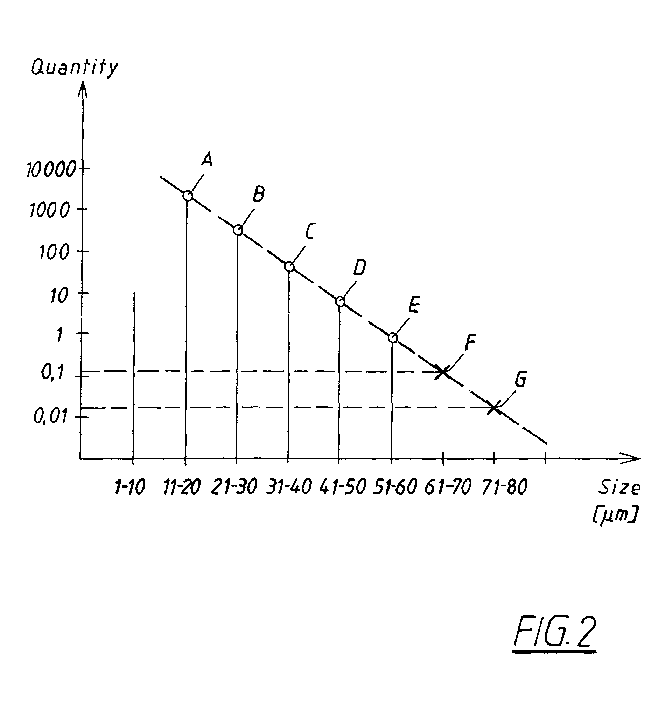

Furthermore, according to the invention, a classification of measuring data preferably takes place regarding the size of the defects. This is illustrated in Fig. 2, which shows a graph over how a relatively large number of defects, e.g. of the order of 1 000 defects, are distributed according to size in a predetermined sample quantity which for example weighs 1 kg. These measuring data can be illustrated in a graphical manner, according to what is shown in Fig. 2, which is a graph the y-axis of which indicates the number of contaminations and the x-axis of which indicates a number of distinct types or size classes of the contaminations in question. For example, these size classes can be constituted by five different categories, more precisely 1-10 µm, 11-20 µm, 21-30 µm, 31-40 µm, 41-50 µm, 51-60 µm, 61-70 µm, and 71-80 µm. However, other classifications of size classes can also be made within the scope of the invention.

During utilization of the invention, an automatic inspection or measuring of any existing defects in the strip 1 is first made, according to what has been described with reference to Fig. 1. After this measuring, measuring data are obtained which indicate how the detected defects are distributed according to size class. After that, size distribution can be plotted in a graph of the type which is shown in Fig. 2. In that way, it can for example be established that the number of detected defects of the respective size 11-20 µm, 21-30 µm, 31-40 µm, 41-50 µm and 51-60 µm, respectively (which are marked by A, B, C, D and E, respectively, in Fig. 2), can be plotted in a graph and be connected with an essentially straight line. In this case, the process is facilitated by means of the fact that the y-axis, which indicates the number of defects, is indicated by means of a logarithmic scale. Moreover, by means of extrapolation of the line which connects the points A-E, information is obtained regarding how many defects of the size 61-70 µm and 71-80 µm, respectively, can be expected to occur in the material in question. This is indicated by means of F and G in Fig. 2. The number of defects of the last-mentioned sizes is less than one, which implies that the defects cannot be found per se in the sample quantity (which e.g. may be 1 kg), but that they can be expected to be found in an amount which is of a larger size.

The invention is not limited to determination (e.g. by means of extrapolation) of the existence of defects within certain fixed sizes, e.g. 61-70 µm and 71-80 µm, according to what is apparent from Fig. 2. The invention can also be utilized in order to provide for example information regarding defects of such a size which is considerably far from the sizes where the measuring has taken place. In other words, according to the invention, it is possible to provide information regarding defects of sizes which are not close to the sizes which are indicated by means of A, B, C, D and E.

From the measurement result, an assessment of the quality of the entire material can be stated. During this quality determination, various bases for forming a judgement can be used. For example, the number of detected contaminations per size class can be utilized in order to determine the quality. Alternatively, the slope of the curve which is apparent from Fig. 2 can be utilized for the quality determination.

After that, materials of varying qualities can be utilized for different applications and for manufacturing various products which are the most suitable according to the exact properties and qualities of each respective material.

Thus, in contrast to the prior art - according to which a simple comparison of sizes with a certain limit value is utilized in order to assess the quality of the entire material - an assessment of the quality of the entire material is achieved according to the invention. This results in a more accurate and efficient detection as compared to the prior art. Furthermore, the invention provides a possibility for a quality determination which not only considers whether there exists any defects in the sample quantity which are larger than a certain limit value. According to the invention, other parameters can be utilized for quality classification of the current materials, e.g. whether any defects within a certain size class (e.g. 1-10 µm) exist, or whether detected defects are distributed with a fixed pattern (which in turn can be read from a graph of the type shown in Fig. 2). In summary, it can be said that the invention makes it possible to utilize increased amounts of information regarding the properties of the material for determining the quality of the material.

The invention is not limited to the embodiments which are described above and shown in the drawings, but may be varied within the scope of the appended patent claims.

For example, the invention can be used for detection of defects in various types of material, not just polythene which is intended for cable manufacture. Furthermore, the invention can in principle be used for manual as well as automatic detection of the existence of defects.

The invention can be utilized for detection of various types of defects, e.g. fibres, gels, soot, metal particles, etc. In this case, a graph of the type which is shown in Fig. 2 may for example be utilized for a certain type or a certain combination of types.

During automatic detection in accordance with that which has been described above, the invention can in principle be utilized without any marking device of type which is shown in Fig. 1.

## Claims

1. Method for determining the existence of contaminations in a material, which method comprises:
providing a relatively small partial quantity of said material as a sample quantity, and
detecting the existence of any defects in said sample quantity,
**characterized in that** it comprises:
detecting defects of a first size and at least a second size,
determining a relationship of the number of detected defects as a function of the size of the defects, and
determining the sizes of a number of defects which is so large that the distribution of detected defects in said sample quantity provides information regarding the existence of defects of additional sizes in said material.

2. Method according to claim 1, **characterized in that** it comprises determining the existence of defects of said additional sizes by means of extrapolation of said relationship.

3. Method according to claim 1 or 2, **characterized in that** the number of detected defects of the respective size is utilized when determining a measure of the quality of the material.

4. Method according to any one of the preceding claims, **characterized in that** the relationship between the number of detected defects of the respective size is utilized for determining a measure of the quality of the material.

5. Method according to any one of the preceding claims, **characterized in that** it comprises detecting defects within a predetermined size interval of the defects.

6. Method according to any one of the preceding claims, **characterized in that** said detecting the existence of any defects in said sample quantity comprises automatic optical detection.

7. Method according to any one of the preceding claims, **characterized in that** said detecting of defects utilizes a sample quantity which is formed as a strip which passes through said detection.

8. Method according to any one of the preceding claims, **characterized in that** said detecting comprises detecting defects of a number which is statistically reliable and in the order of at least 50, preferably at least 500.

9. Method according to any one of the preceding claims,
**characterized in that** it comprises:
detecting defects which are smaller than a predetermined limit value, and
producing information regarding defects which are larger than said limit value on the basis of information regarding said defects which are smaller than the limit value.

10. Device for determining the existence of contaminations in a material, wherein said determining is carried out for a relatively small partial quantity of said material which constitutes a sample quantity, which device comprises a detector (4) for detecting the existence of any defects in said sample quantity, **characterized in that** said detector (4) is provided by a measuring unit which is adapted for detecting defects of a first size and at least a second size and for determining a relationship of the number of detected defects as a function of the size of the defects, comprising determining the sizes of a number of defects which is so large that the distribution of detected defects in said sample quantity provides information regarding the existence of defects of additional sizes in said material.

11. Device according to claim 10, **characterized in that** said material is constituted by a plastic material, preferably polythene, which is utilized in the manufacture of electrical cables.

12. Device according to claim 10 or 11, **characterized in that** said detector (4) is constituted by an optical detector.
